# EUROPEAN PATENT SPECIFICATION

(11) **EP 1 651 718 B1**
(45) Date of publication and mention of the grant of the patent: **11.03.2009**
(21) Application number: 04774118.6
(22) Date of filing: 13.07.2004
(51) Int. Cl.: C08K 5/523, C08L 25/10, C08L 71/12, C08G 18/00, C08K 5/5337, C08K 5/5357

(54) **FLAMEPROOF THERMOPLASTIC RESIN COMPOSITION**
FLAMMGESCHÜTZTE THERMOPLASTISCHE HARZZUSAMMENSETZUNG
COMPOSITION DE RESINE THERMOPLASTIQUE IGNIFUGE

(30) Priority: 04.08.2003 KR 2003053858
(43) Date of publication of application: 03.05.2006
(73) Proprietor: Cheil Industries Inc., Kumi-shi, Kyungsangbuk-do 730-710 (KR)
(72) Inventor: AHN, Sung Hee, Seongdong-gu, Seoul 133-020 (KR); YANG, Jae Ho, Gyeonggi-do, 435-040 (KR); HONG, Sang Hyun, Gyeonggi-do, 437-070 (KR); BAE, Su Hak, Seongdong-gu, Seoul, 133-112 (KR); RYU, Young Sik, Anyang-si, Gyeonggi-do, 431-080 (KR)
(74) Representative: Bublak, Wolfgang
(86) International application number: PCT/KR2004/001732
(87) International publication number: WO 2005/012418

(56) References cited:
- EP-A- 0 075 863
- EP-A- 1 262 519
- GB-A- 2 003 888
- KR-A- 2001 009 845
- KR-A- 2003 078 189
- KR-A- 2004 003 563
- KR-A- 2004 027 104
- KR-A- 2004 058 773
- US-A- 4 273 881
- US-A- 4 618 633
- DATABASE CA [Online] CHEMICAL ABSTRACTS SERVICE, COLUMBUS, OHIO, US; 6 September 1986 (1986-09-06), TSUNETANI, MASAMI ET AL: "Fire-resistant resin molding compositions" XP002393756 retrieved from STN Database accession no. 1986:479909 -& JP 61 009450 A (ASAHI CHEMICAL INDUSTRY CO., LTD., JAPAN) 17 January 1986 (1986-01-17)

## Description

### Field of the Invention

The present invention relates to a flame retardant thermoplastic resin composition. More particularly, the present invention relates to a thermoplastic resin composition with good flame retardancy and heat resistance by employing a ring-shaped phosphonic acid compound to the blend of rubber modified polystyrene resin and polyphenylene ether resin.

### Background of the Invention

Polyphenylene ether resin has good thermal resistance, high impact strength, and good dimensional stability. Accordingly, the resin has been widely applied for common uses. However, the disadvantage could be observed that the polyphenylene ether resin has poor processability due to its excessively high thermal resistance. For this reason, the polyphenylene ether resin is blended with a rubber-modified styrenic resin or a styrenic resin to improve processability for use of electronic appliances such as personal computers, facsimiles, and the like. Further, in case that a blend of a polyphenylene ether and a rubber modified styrene-containing resin is applied to the fields of electric or electronic goods, flame-retardant property should be given to the resin.

A widely known method for giving the flame retardant property is that a halogen-containing compound or an antimony-containing compound is added to a rubber modified styrene-containing resin. However, the disadvantages could be observed that the halogen-containing compound results in the corrosion of the mold itself by the hydrogen halide gases released during the molding process and is fatally harmful due to the toxic gases liberated in case of fire. Especially, polybromodiphenyl ether, mainly used for a halogen containing flame retardant, can produce toxic gases such as dioxin or furan during combustion. So, flame-retardants that are prepared without a halogen-containing compound have become a major concern in this field.

U.S. patent No. 3,639,506 discloses a resin composition using triphenyl phosphate (TPP) as a flame retardant for giving flame retardancy to a polyphenylene ether resin and a stryrenic resin. However, in this case, halogen-containing compound should be added in order to overcome the degradation of heat resistance, because the heat resistance of the resin composition is lowered due to the addition of TPP.

U.S. patent No. 3,883,613 discloses a resin composition using trimesityl phosphate as a flame retardant to a polyphenylene ether resin and a stryrenic resin. U.S. patent No. 4,526,917 discloses a resin composition using TPP and trimesityl phosphate as flame retardants. However, a large amount of flame retardant is needed to obtain sufficient flame retardancy.

Accordingly, the present inventors have developed a flame retardant thermoplastic resin composition which has excellent flame retardancy but not show deterioration of heat resistance by employing a ring-shaped phosphonic acidcompound to the blend of rubber modified polystyrene resin and polyphenylene ether resin.

### Objects of the Invention

An object of the present invention is to provide a flame retardant thermoplastic resin composition with good flame retardancy by using ring-shaped phosphonic acidcompound as a flame retardant.

Another object of the present invention is to provide a flame retardant thermoplastic resin composition with good heat resistance.

Other objects and advantages of this invention will be apparent from the ensuing disclosure and appended claims.

### Summary of the Invention

The flameproof thermoplastic resin composition according to the present invention comprises (A) 20 to 90 parts by weight of a rubber modified polystyrene resin; (B)10 to 80 parts by weight of a polyphenylene ether resin; (C) 0.1 to 30 parts by weight of a ring-shaped phosphonic acid compound, per 100 parts by weight of the sum of (A) and (B); and (D) 0 to 25 parts by weight of an aromatic phosphoric acid ester compound, per 100 parts by weight of the sum of (A) and (B).

### Detailed Description of the Invention

### (A) Rubber modified polystyrene resin

The rubber-modified polystyrene resin used in the present invention as a base resin can be prepared by blending a rubber, an aromatic mono-alkenyl monomer and/or alkyl ester monomer and polymerizing with heat or a polymerization initiator.

The Rubber which can be used in this invention includes butadiene rubbers, isoprene rubbers, styrene-butadiene copolymers and alkylacrylic rubbers. The amount of the rubber is 0 to 30 parts by weight, preferably 0 to 15 parts by weight.

Further, the monomer used in rubber-modified polystyrene is one or more monomer selected from the group consisting of aromatic mono-alkenyl monomer, alkyl ester monomers of acrylic acid or methacrylic acid. The amount of the monomers is 70-100 parts by weight, preferably 85-97 parts by weight.

The resin composition of the present invention can be polymerized with heat or a polymerization initiator. The polymerization initiator used in the present invention may be one or more selected from the group consisting of organic peroxides such as benzoyl peroxide, t-butyl hydroperoxide, acetyl peroxide and cumene hydroperoxide or azo compounds such as azobisisobutyronitrile (AIBN).

The rubber-modified polystyrene resin of the present invention can be produced by a known polymerization method such as bulk polymerization, suspension polymerization, emulsion polymerization or combination thereof. Among them, the bulk polymerization is preferred.

To acquire optimum physical properties in consideration of the blend of rubber-modified polystyrene resin and polyphenylene ether, the average size of rubber particles is preferably in the range of from 0.1 to 6.0 µm(z-average), more preferably 0.25 to 3.5 µm(z-average). The rubber-modified polystyrene resin or polystyrene resin without rubber may be used in single or in combination as a mixture.

### (B) Polyphenylene Ether (PPE)

Polyethylene ether is added to the rubber-modified polystyrene resin to improve flame retardancy and heat resistance.

Examples of the polyphenylene ether resin include poly(2,6-dimethyl-1,4-phenylene)ether, poly(2,6-diethyl-1,4-phenylene)ether, poly(2,6-dipropyl -1,4-phenylene)ether, poly(2-methyl-6-ethyl-1,4-phenylene)ether, poly(2-methyl-6-propyl-1,4-phenylene) ether, poly(2-ethyl-6-propyl-1,4-phenylene) ether, poly(2,6-diphenyl-1,4-phenylene) ether, copolymer of poly(2,6-dimethyl-1,4-phenylene) ether and poly(2,3,6-trimethyl-1,4-phenylene) ether, and copolymer of poly(2,6-dimethyl-1,4-pheylene) ether and poly(2,3,5-triethyl-1,4-phenylene) ether. Preferably, copolymer of poly(2,6-dimethyl-1,4-phenylene) ether and poly(2,3,6-trimethyl-1,4-phenylene) ether, and poly(2,6-dimethyl-1,4-phenylene) ether are preferably used, more preferably poly(2,6-dimethyl-1,4-phenylene) ether is preferably used.

The degree of polymerization of polyphenylene ether is not limited specifically, but considering heat-stability or processability of the resin composition, it is preferable that the viscosity of polypheylene ether is in the range of about 0.2 to 0.8 measured in chloroform solvent at 25 °C .

The base resin is composed of 20~90 parts by weight of the rubber-modified polystyrene resin (A) and 10~80 parts by weight of the polyphenylene ether resin (B).

### (C) Ring-Shaped Phosphonic Acid Ester Compound

The ring-shaped phosphonic acid ester compound of the present invention is represented by the following chemical Formula ( I ): 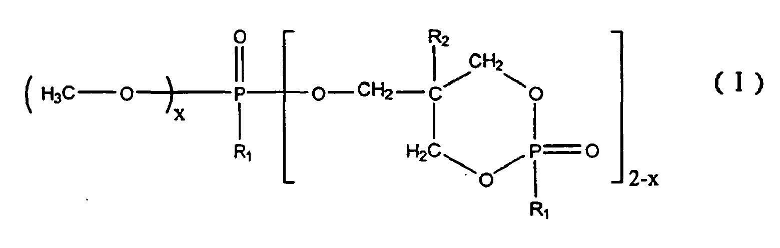 wherein R₁ and R₂ are independently of each other substituted or non-substituted C₁-C₂₀ alkylene group, substituted or non-substituted C₁-C₂₀ alkenylene group, substituted or non-substituted C₁-C₂₀ alkynylene group, substituted or non-substituted C₆-C₃₀ arylene group, substituted or non-substituted C₆-C₃₀ arylakylene group, substituted or non-substituted C₁-C₃₀ heteroalkylene group, substituted or non-substituted C₆-C₃₀ heteroarylene group, substituted or non-substituted C₆-C₃₀ hetero arylakylene group; and x is 0 or 1.

Examples of the ring-shaped phosphonic acid ester compound having the structural formula ( I ) include methyl-bis(5-ethyl-2-methyl-1,3,2-dioxaphorinan-5yl) methyl methyl phosphonic acid ester P-oxide, methyl-bis(5-ethyl-2-methyl-1,3,2-dioxaphorinan-5yl) phosphonic acid ester P, P'-dioxide.

The ring-shaped phosphonic acid ester compound(C) of present invention is used in the amount of from 0.1 to 30 parts by weight 100 parts by weight of the base resin containing (A)+(B).

### (D) Aromatic phosphoric acid ester compound

The aromatic phosphoric acid ester compound used in the present invention is a compound having the following structural formular (H): 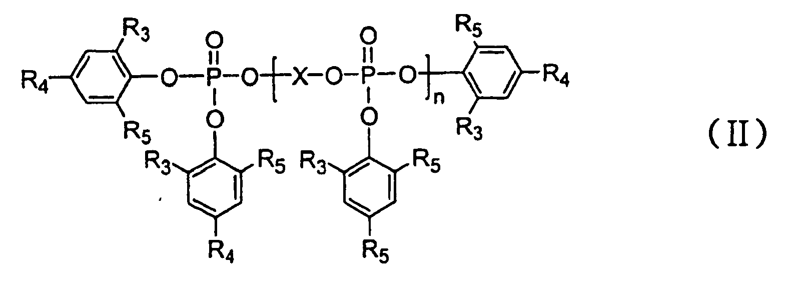 wherein R₃, R₄ and R₅ independently of one another are hydrogen or C₁₋₄ alkyl; X is a C₆₋₂₀ aryl group or alkyl-substituted C₆₋₂₀ aryl group that are derivatives from a dialcohol derivative such as resorcinol, hydroquinol and bisphenol-A; and n is 0-4.

Where n is 0, the compound represented in the structural formular (II) is triphenyl phosphate, tricresyl phosphate, trixyrenyl phosphate, tri(2,6-dimethyl phenyl) phosphate, tri(2,4,6-trimethyl phenyl) phosphate, tri(2,4-ditertiary butyl phenyl) phosphate, tri(2,6-ditertiary butyl phenyl) phosphate, and the like, and where n is 1, the compounds include resorcinolbis(diphenyl) phosphate, resorcinolbis(2,6-dimethyl phenyl) phosphate, resorcinolbis(2,4-ditertiary butyl phenyl) phosphate, hydroquinolbis(2,6-dimethyl phenyl) phosphate, hydroquinolbis(2,4-ditertiary butyl phenyl) phosphate, and the like. The compounds can be used alone or in combination therewith.

In the present invention, the aromatic phosphoric acid ester can be used in the amount of 0 to 25 parts by weight per 100 parts by weight of base resin.

Other additives may be contained in the resin composition of the present invention. The additives include an anti-dripping agent, an impact modifier, a plasticizer, inorganic filler, a heat stabilizer, an anti-oxidant, a compatibilizer, a light stabilizer, a pigment, and/or dye. The inorganic filler is such as metal oxide, asbestos, glass fiber, talc, ceramics, a carbonate, and a sulphate. The additives are employed in the amount of 0 to 30 parts by weight on the basis of 100 parts by weight of the base resin.

The present invention may be better understood by reference to the following examples that are intended for the purpose of illustration and are not to be construed as in any way limiting the scope of the present invention, which is defined in the claims appended hereto.

### Examples

The components to prepare flameproof thermoplastic resin compositions in Examples and Comparative Examples are as follows:
(A) Rubber Modified Polystyrene Resin
   (a₁) Rubber modified polystyrene resin : High impact polystyrene of Cheil Industries Inc. of Korea (Product name: HR-1380F) was used. The particle size of butadiene rubber was 1.5 µm. And the content of rubber was 6.5 % by weight.
   (a₂) Styrenic resin: General purpose polystyrene (GPPS) of Cheil Industries Inc. (product name: HF-2680) with a weight average molecular weight of 210,000 was used.
(B) Polyphenylene Ether Resin (PPE)
   (b₁) Poly (2,6-dimethyl-phenyl ether) by Asahi Kasei Co. of Japan (product name: P-402) in the form of powder was used. The particles had the average size of several microns(µm).
   (b₂) Poly (2,6-dimethyl-phenyl ether) by GE (product name: HPP-820) in the form of powder was used. The particles had the average size of several microns(µm).
(C) Ring-shaped phosphonic acid ester Compound
   Antiblaze 1045 of Rhodia Co. which contains 20.8 % of phosphorus [a mixture of 8 % by weight of methyl-bis(5-ethyl-2-methyl-1,3,2-dioxaphorinan-5yl) methyl methyl phosphonic acid ester P-oxide and 85 % by weight of methyl-bis (5-ethyl-2-methyl-1,3,2-dioxaphorinan-5yl) phosphonic acid ester P, P'-dioxide] was used.
(D) Aromatic Phosphoric Acid Ester Compound
   (d₁) Triphenylphosphate produced by Daihachi Chemical of Japan with a melting point of 48 °C was used.
   (d₂) Resorcinol bis (2,6-dimethylphenyl)phosphate produced by Daihachi Chemical of Japan (product name: PX200) was used.
   (d₃) Bisphenol-A diphosphate produced by Daihachi Chemical of Japan (product name: CR-741) was used.
   (d₄) Resorcinol diphosphate produced by Daihachi Chemical of Japan (product name: CR-733S) was used.
(E) Additives
   Teflon (registered trademark) 7AJ by Dupont company was used.

### Examples 1∼11

The components as shown in Table 1 were mixed and the mixture was extruded at 200~280 °C with a conventional twin screw extruder in pellets. The resin pellets were dried at 80 °C for 3 hours, and molded into test specimens using a 6 oz injection molding machine at 180~280 °C and barrel temperature of 40~80 °C . The flame retardancy of the test specimens was measured in accordance with UL94VB with a thickness of 1/8". The heat resistance was measured according to ASTM D-1525 under 5 kg. The test results are presented in Table 1.

**Table 1**

| | | Examples | | | | | | | | | | | Comparative Examples | | | |
|---|---|---|---|---|---|---|---|---|---|---|---|---|---|---|---|---|
| | | 1 | 2 | 3 | 4 | 5 | 6 | 7 | 8 | 9 | 10 | 11 | 1 | 2 | 3 | 4 |
| (A) | (a₁) | 67 | 67 | 67 | 67 | 67 | 67 | 67 | 37 | 67 | 70 | 75 | 67 | 67 | 67 | 67 |
| | (a₂) | - | - | - | - | - | - | - | 30 | - | - | - | - | - | - | - |
| (B) | (b₁) | 33 | 33 | 33 | 33 | 33 | 33 | 33 | 33 | - | - | - | 33 | 33 | 33 | 33 |
| | (b₂) | - | - | - | - | - | - | - | - | 33 | 30 | 25 | - | - | - | - |
| (C) | | 3 | 3 | 3 | 3 | 5 | 10 | 15 | 3 | 3 | 4 | 5 | - | - | - | - |
| (D) | (d₁) | 9 | - | - | - | - | - | - | - | - | - | - | 12 | - | - | - |
| | (d₂) | - | 16 | - | - | 14 | 9 | 4 | 10 | 10 | 10 | 10 | - | 19 | - | - |
| | (d₃) | - | - | 17 | - | - | - | - | - | - | - | - | - | - | 20 | - |
| | (d₄) | - | - | - | 12 | - | - | - | - | - | - | - | - | - | - | 15 |
| (E) | | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| UL94 1/8" | | V-0 | V-0 | V-0 | V-0 | V-0 | V-0 | V-0 | V-0 | V-0 | V-0 | V-0 | V-1 | V-1 | V-1 | V-1 |
| VST | | 87 | 86.5 | 86 | 86.5 | 88 | 92 | 96 | 94 | 94 | 90 | 86 | 83 | 84 | 83 | 83 |

As shown above, the resin compositions employing a ring-shaped phosphonic acid ester compound and aromatic phosphoric acid ester compound as a flame retardant show higher flame retardancy and heat resistance compared to those employing an aromatic phosphoric acid ester compound alone.

## Claims

1. A flame retardant thermoplastic resin composition comprising:
(A) 20 to 90 parts by weight of a rubber-modified polystyrene resin; wherein the average size of rubber particles is in the range of from 0.1 to 6.0 µm (z-average);
(B) 10 to 80 parts by weight of a polyphenylene ether resin;
(C) 0.1 to 30 parts by weight of a ring-shaped phosphonic acid ester compound based on 100 parts by weight of the sum of (A) and (B); and
(D) 0 to 25 parts by weight of an aromatic phosphoric acid ester compound based on 100 parts by weight of the sum of (A) and (B).

2. The flame retardant thermoplastic resin composition as defined in claim 1, wherein said polyphenylene ether resin is selected from the group consisting of poly(2,6-dimethyl- 1,4-phenylene)ether, poly(2,6-die.thyl-1,4-phenylene)ether, poly(2,6-dipropyl -1,4-phenylene)ether, poly(2-methyl-6-ethyl-1,4-phenylene)ether, poly(2-methyl-6-propyl-1,4-phenylene) ether, poly(2-ethyl-6-propyl-1,4-phenylene) ether, poly(2,6-diphenyl-1,4-phenylene) ether, copolymer of poly(2,6-dimethyl-1,4-phenylene) ether and poly(2,3,6-trimethyl-1,4-phenylene) ether, and copolymer of poly(2,6-dimethyl-1,4-pheylene) ether and poly(2,3,5-triethyl-1,4-phenylene) ether.

3. The flame retardant thermoplastic resin composition as defined in claim 1, wherein said ring-shaped phosphonic acid ester compound is represented by the following formula (I): 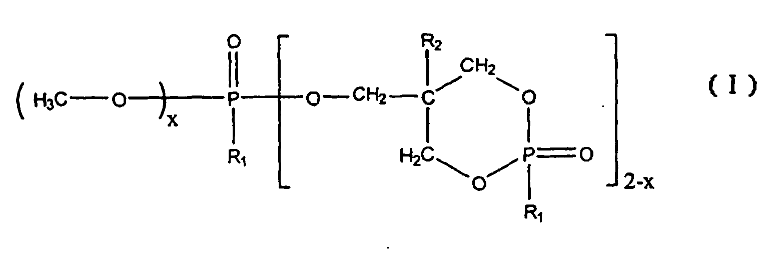 wherein R₁ and R₂ are independently of each other substituted or non-substituted C₁-C₂₀ alkylene group, substituted or non-substituted C₁-C₂₀ alkenylene group, substituted or non-substituted C₁-C₂₀ alkynylene group, substituted or non-substituted C₆-C₃₀ arylene group, substituted or non-substituted C₆-C₃₀ arylakylene group, substituted or non-substituted C₁-C₃₀ heteroalkylene group, substituted or non-substituted C₆-C₃₀ heteroarylene group, substituted or non-substituted C₆-C₃₀ hetero arylakylene group; and x is 0 or 1.

4. The flame retardant styrenic resin composition as defined in claim 1, wherein said ring-shaped phosphonic acid ester compound is methyl-bis (5-ethyl-2-methyl-1,3,2-dioxaphorinan-5yl) methyl methyl phosphonic acid ester P-oxide or methyl- bis(5-ethyl-2-methyl- 1,3,2-dioxaphorinan-5yl) phosphonic acid ester P, P'-dioxide.

5. The flame retardant thermoplastic resin composition as defined in claim 1, wherein said aromatic phosphoric acid ester compound is represented by the following formula (II): 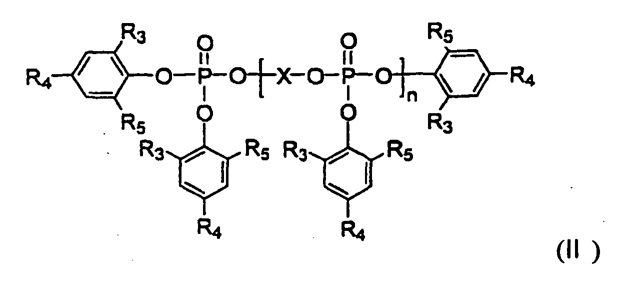 wherein R₃, R₄ and R₅ independently of one another are hydrogen or C₁₋₄ alkyl; X is a C₆₋₂₀ aryl group or alkyl-substituted C₆₋₂₀ aryl group that are derivatives from a dialcohol derivative such as resorcinol, hydroquinol and bisphenol-A; and n is 0~4.

6. The flame retardant thermoplastic resin composition as defined in claim 1, which further comprises an anti-dripping agent, an impact modifier, a plasticizer, an inorganic filler, a heat stabilizer, an anti-oxidant, a compatibilizer, a light stabilizer, a pigment, and/or dye.

## Patentansprüche

1. Flammhemmende thermoplastische Harzzusammensetzung, umfassend:
(A) 20 bis 90 Gewichtsteile eines kautschukmodifizierten Polystyrolharzes;
wobei die mittlere Größe von kautschukmodifizierten Teilchen im Bereich von 0,1 bis 6,0 µm liegt (z-Durchschnitt);
(B) 10 bis 80 Gewichtsteile eines Polyphenylenetherharzes;
(C) 0,1 bis 30 Gewichtsteile einer ringförmigen Phosphonsäureesterverbindung auf der Basis von 100 Gewichtsteilen der Summe von (A) und (B); und
(D) 0 bis 25 Gewichtsteile einer aromatischen Phosphorsäureesterverbindung auf der Basis von 100 Gewichtsteilen der Summe von (A) und (B).

2. Flammhemmende thermoplastische Harzzusammensetzung wie in Anspruch 1 definiert, wobei das Polyphenylenetherharz ausgewählt ist aus der Gruppe, bestehend aus Poly(2,6-dimethyl-1,4-phenylen)ether, Poly(2,6-diethyl-1,4-phenylen)ether, Poly(2,6-dipropyl-1,4-phenylen)ether, Poly(2-methyl-6-ethyl-1,4-phenylen)ether, Poly(2-methyl-6-propyl-1,4-phenylen)ether, Poly(2-ethyl-6-propyl-1,4-phenylen)ether, Poly(2,6-diphenyl-1,4-phenylen)ether, Copolymer von Poly(2,6-dimethyl-1,4-phenylen)ether und Poly(2,3,6-trimethyl-1,4-phenylen)ether und Copolymer von Poly(2,6-dimethyl-1,4-phenylen)ether und Poly(2,3,5-triethyl-1,4-phenylen)ether.

3. Flammhemmende thermoplastische Harzzusammensetzung wie in Anspruch 1 definiert, wobei die ringförmige Phosphonsäureesterverbindung dargestellt ist durch die folgende Formel (I) 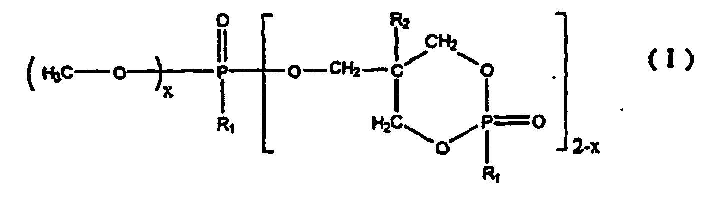 wobei R₁ und R₂ unabhängig voneinander für eine substituierte oder nicht-substituierte C₁-C₂₀-Alkylengruppe, substituierte oder nicht-substituierte C₁-C₂₀-Alkenylengruppe, substituierte oder nicht-substituierte C₁-C₂₀-Alkinylengruppe, substituierte oder nicht-substituierte C₆-C₃₀-Arylengruppe, substituierte oder nicht-substituierte C₆-C₃₀-Arylalkylengruppe, substituierte oder nicht-substituierte C₁-C₃₀-Heteroalkylengruppe, substituierte oder nicht-substituierte C₆-C₃₀-Heteroarylengruppe, substituierte oder nicht-substituierte C₆-C₃₀-Heteroarylalkylengruppe stehen; und x für 0 oder 1 steht.

4. Flammhemmende Styrolharzzusammensetzung wie in Anspruch 1 definiert, wobei es sich bei der ringförmigen Phosphonsäureesterverbindung um Methylbis(5-ethyl-2-methyl-1,3,2-dioxaphorinan-5-yl)methylmethylphosphonsäureester-P-oxid oder Methylbis(5-ethyl-2-methyl-1,3,2-dioxaphorinan-5-yl) phosphonsäureester-P,P'-dioxid handelt.

5. Flammhemmende thermoplastische Harzzusammensetzung wie in Anspruch 1 definiert, wobei die aromatische Phosphorsäureesterverbindung dargestellt ist durch die folgende Formel (II): 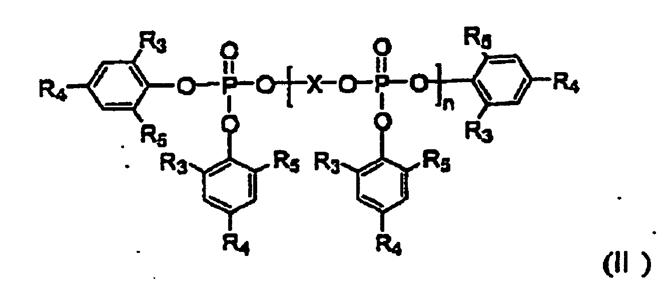 wobei R₃, R₄ und R₅ unabhängig voneinander für Wasserstoff oder C₁₋₄-Alkyl stehen; X für eine C₆₋₂₀-Arylgruppe oder alkylsubstituierte C₆-C₂₀-Arylgruppe steht, bei welchen es sich um Derivate von einem Dialkoholderivat wie Resorcinol, Hydrochinol und Bisphenol-A handelt; und n für 0~4 steht.

6. Flammhemmende thermoplastische Zusammensetzung wie in Anspruch 1 definiert, die ferner ein tropfhemmendes Mittel, einen Schlagmodifikator, einen Weichmacher, einen anorganischen Füllstoff, einen Wärmestabilisator, ein Antioxidationsmittel, einen Verträglichmacher, einen Lichtstabilisator, ein Pigment und/oder einen Farbstoff umfasst.

## Revendications

1. Composition de résine thermoplastique retardatrice de flamme, comprenant :
(A) 20 à 90 parties en poids d'une résine de polystyrène modifiée par du caoutchouc ; la granulométrie moyenne des particules de caoutchouc étant comprise dans la plage de 0,1 à 6,0 µm (moyenne Z) ;
(B) 10 à 80 parties en poids d'une résine de poly(oxyde de phénylène) ;
(C) 0,1 à 30 parties en poids d'un ester annulaire de l'acide phosphonique, pour 100 parties en poids de la somme de (A) et de (B) ; et
(D) 0 à 25 parties en poids d'un ester aromatique de l'acide phosphorique, pour 100 parties en poids de la somme de (A) et de (B).

2. Composition de résine thermoplastique retardatrice de flamme selon la revendication 1, dans laquelle ladite résine de poly(oxyde de phénylène) est choisie dans le groupe consistant en le poly(oxyde de 2,6-diméthyl-1,4-phénylène), le poly(oxyde de 2,6-diéthyl-1,4-phénylène), le poly(oxyde de 2,6-diproipyl-1,4-phénylène), le poly(oxyde de 2-méthyl-6-éthyl-1,4-phénylène), le poly(oxyde de 2-méthyl-6-propyl-1,4-phénylène), le poly(oxyde de 2-éthyl-6-propyl-1,4-phénylène), le poly(oxyde de 2,6-diphényl-1,4-phénylène), le copolymère du poly(oxyde de 2,6-diméthyl-1,4-phénylène) et du poly(oxyde de 2,3,6-triméthyl-1,4-phénylène) et le copolymère du poly(oxyde de 2,6-diméthyl-1,4-phénylène) et du poly(oxyde de 2,3,5-triéthyl-1,4-phénylène).

3. Composition de résine thermoplastique retardatrice de flamme selon la revendication 1, dans laquelle ledit ester annulaire de l'acide phosphonique est représenté par la formule (I) ci-après : 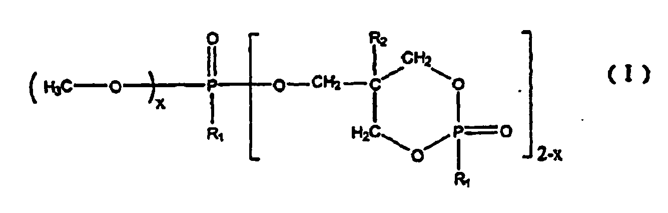 dans laquelle R₁ et R₂ représentent chacun indépendamment de l'autre un groupe alkylène en C₁-C₂₀ substitué ou non substitué, un groupe alcénylène en C₁-C₂₀ substitué ou non substitué, un groupe alcynylène en C₁-C₂₀ substitué ou non substitué, un groupe arylène en C₆-C₃₀ substitué ou non substitué, un groupe arylalkylène en C₆-C₃₀ substitué ou non substitué, un groupe hétéroalkylène en C₁-C₃₀ substitué ou non substitué ou un groupe hétéroarylène en C₆-C₃₀ substitué ou non substitué, un groupe hétéroarylalkylène en C₆-C₃₀ substitué ou non substitué ; et x vaut 0 ou 1.

4. Composition de résine styrénique retardatrice de flamme selon la revendication 1, dans laquelle ledit ester annulaire de l'acide phosphonique est le P-oxyde de l'ester méthylique de l'acide bis(5-éthyl-2-méthyl-1,3,2-dioxaphorinanne-5-yl)méthyl-méthylphosphonique ou le P,P'-dioxyde de l'ester méthylique de l'acide bis(5-éthyl-2-méthyl-1,3,2-dioxaphorinanne-5-yl)phosphonique.

5. Composition de résine thermoplastique retardatrice de flamme selon la revendication 1, dans laquelle ledit ester aromatique de l'acide phosphorique est représenté par la formule (II) ci-après : 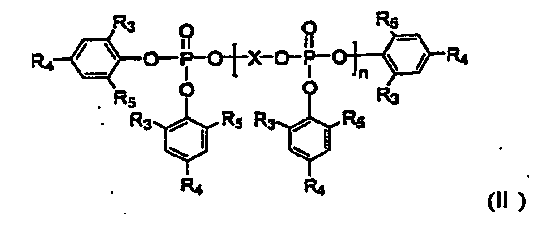 dans laquelle R₃, R₄ et R₅ représentent chacun indépendamment de l'autre un atome d'hydrogène ou un groupe alkyle en C₁₋₄ ; X est un groupe aryle en C₆₋₂₀ ou aryl en C₆-₂₀ à substitution alkyle, qui sont des dérivés d'un dérivé dialcool tel que le résorcinol, l'hydroquinol et le bisphénol-A ; et n vaut 0-4.

6. Composition de résine thermoplastique retardatrice de flamme selon la revendication 1, qui comprend en outre un agent anti-égouttage, un agent modifiant choc, un plastifiant, une charge inorganique, un thermostabilisant, un antioxydant, un agent de compatibilisation, un photostabilisant, un pigment et/ou un colorant.
